# EUROPÄISCHE PATENTSCHRIFT

(11) **EP 1 922 710 B1**
(45) Veröffentlichungstag und Bekanntmachung des Hinweises auf die Patenterteilung: **04.03.2009**
(21) Anmeldenummer: 06776843.2
(22) Anmeldetag: 15.08.2006
(51) Int. Cl.: G09F 15/00

(54) **TRANSPORTABLE GROSSBILDLEINWAND**
LARGE-SIZED TRANSPORTABLE PROJECTION SCREEN
ECRAN DE PROJECTION GRAND FORMAT PORTATIF

(30) Priorität: 16.08.2005 DE 202005013031 U
(43) Veröffentlichungstag der Anmeldung: 21.05.2008
(73) Patentinhaber: Biggair GmbH, 63452 Hanau (DE)
(72) Erfinder: GANZEVOORT, Günter, 35075 Gladenbach-Weitershausen (DE)
(74) Vertreter: Nüsse, Stephan
(86) Internationale Anmeldenummer: PCT/EP2006/008034
(87) Internationale Veröffentlichungsnummer: WO 2007/020044

(56) Entgegenhaltungen:
- WO-A-02/47057
- WO-A-20/05019568
- DE-A1- 3 028 258
- DE-A1- 10 034 912
- DE-U1- 20 318 473
- US-A- 4 802 734
- US-A- 6 008 938
- US-A1- 2004 211 100

## Beschreibung

Die Erfindung betrifft eine transportable Großbildleinwand nach dem Oberbegriff des Anspruchs 1, u.a. aufweisend einen befüllbaren, formvariablen Hohlkörper in Form einer Konstruktion aus befüllbaren Röhren.

Eine Großbildleinwand ist bekannt aus US 2004/0211100 A1. WO 02/47057 A1 beschreibt eine andere Vorrichtung mit dreidimensionalem Aufbau zum Darstellen sichtbarer Bilder mit einem aufblasbaren Körper und einer Basis. Der Körper ist durch röhrenartige Teile gebildet, welche in aufgeblasenem Zustand eine vorbestimmte Form haben, um wenigstens eine Darstellungsfläche zum Darstellen der sichtbaren Bilder bereit zu stellen. US 6,008,938 beschreibt eine andere mit Kaltluft aufblasbare transportable Projektionsleinwand, die zwischen zwei aufblasbaren Türmen und einer die Türme verbindenden aufblasbaren Röhre gespannt ist. Die zweidimensionale Struktur wird mit an den Türmen befestigten Haltestricken und Auslegern aufrecht gehalten und am Boden befestigt.

Ein weiterer zweidimensionaler Projektionsschirm weist gemäß DE 3028258 A1 eine flexible, konkave Projektionsfläche und einen aufblasbaren Rahmen auf, so dass dieser zur Versteifung und um die Projektionsfläche gestreckt zu halten, unter Druck gesetzt werden kann, wobei der Rahmen so ausgebildet ist, dass er einen Nebenlicht-Blendschirm bildet. Es sind auch flächige, zweidimensionale Großbildleinwände bekannt, die aufblasbare Stützen aufweisen.

Aus DE 100 34 912 A1 und DE 203 18 473 U1 ist eine flächige Konstruktion einer transportablen Großbildleinwand bekannt. In DE 100 34 912 A1 ist ein Rahmen durch mit gasförmigen Medien befüllbaren langgestreckten Schläuchen aus flexiblen Materialien durch Zusammenführen derer Enden geformt. Gemäß DE 203 18 473 ist eine nahezu ebene aufblasbare Hohlfläche gebildet, welche aus mehreren, einzelnen, fest miteinander verbundenen, sequentiell befüllbaren, parallel zueinander angeordneten Hohlkörpern gebildet ist- Auch bei dieser flächigen Konstruktion sind Seile, Gurte oder Stangen zum stabilisierenden Abspannen der Konstruktion, am Boden notwendig.

Aus US 4,802,734 ist eine mit Kaltluft aufblasbare Leinwand bekannt, welche ähnlich einem Ballon aufgeblasen wird und die zudem durch ebenfalls aufblasbare Taschen gebildete Wände begrenzt ist. Um die ballonartige Struktur in Form zu halten, sind die obere und untere Decke innerhalb des Ballons durch Seile gegeneinandergezogen.

Wünschenswert wäre es, sowohl Standfestigkeit als auch Bildqualität für eine Großbildleinwand zu verbessern.

An dieser Stelle setzt die Erfindung an, deren Aufgabe es ist, eine transportable Großbildleinwand anzugeben, deren Standfestigkeit und Bildqualität wesentlich verbessert ist.

Die Aufgabe wird durch die Erfindung gemäß Anspruch 1 mit der eingangs genannten Großbildleinwand gelöst, bei der erfindungsgemäß die Merkmale des kennzeichnenden Teils des Anspruchs 1 vorgesehen sind. Dabei ist ein von der Konstruktion festgelegter dreidimensionaler Innenraum vorgesehen, der allseitig begrenzt ist, wobei die Röhren in drei Raumrichtungen orientiert sind, und wobei der Innenraum durch wenigstens eine an einem von einem Teil der Röhren gebildeten Rand angeordnete Darstellungsfläche begrenzt ist.

Unter einer Röhre wird gemäß der Erfindung ein beliebiger befüllbarer formvariabler Hohlkörper verstanden, der länglich ausgebildet ist. Dabei kann eine Röhre sowohl eine mehr oder weniger durch den Innendruck bestimmte wulstartige Form einnehmen als auch eine - wie im einzelnen noch erläutert wird - definierte, z.B, zylindrische, Form mit vorgegebener beliebiger Grundfläche.

Die Konstruktion gemäß der Erfindung bildet mit anderen Worten durch die in drei Raumrichtungen orientierten Röhren ein gerüst- oder gerippeartiges Konstrukt, durch das der dreidimensionale Innenraum festgelegt ist, d.h., zwischen den Röhren sind offene Flächen des Gerüsts oder Gerippes vorhanden.

Die Erfindung hat erkannt, dass aufgrund der durch die Röhren gebildeten dreidimensionalen Konstruktion ein Hohlkörper gebildet wird, welcher aufgrund seiner dreidimensionalen Ausprägung eine - im Vergleich zu den eingangs genannten - im wesentlichen lediglich zweidimensional realisierten transportablen Großbildleinwänden - Eigenstandfestigkeit aufweist, die in der Regel nicht durch zusätzliche Seile, Rahmen oder Stützkonstruktionen gewährleistet werden muss. Mit anderen Worten, die Erfindung hat erkannt, dass mit der nach dem obigen Konzept gebildeten transportablen Großbildleinwand ein befüllbarer formvariabler Hohlkörper zur Verfügung gestellt ist, der in kürzester Zeit - beispielsweise innerhalb von 10 bis 30 min. - befüllbar ist und dabei eine Eigenstandfestigkeit entwickelt. Die vor allem zeitaufwändigen und teueren Abspannmaßnahmen sind bei der transportablen Großbildleinwand gemäß dem oben beschriebenen Konzept vermieden. Darüber hinaus werden auch Arbeiten in einer Höhe von üblicherweise einigen Metern bei der transportablen Großbildleinwand gemäß dem vorliegenden Konzept vermieden. Allgemein gesprochen, handelt es sich praktisch um ein "turn-key-System", bei dem die transportable Großbildleinwand mit dem Befüllen des formvariablen Hohlkörpers ohne weitere Maßnahmen zur Verfügung gestellt ist.

Darüber hinaus weist die Großbildleinwand gemäß dem vorliegenden Konzept gegenüber den üblichen flächig und zweidimensional ausgebildeten Großbildleinwänden eine erheblich verbesserte Bildqualität auf. Dies wird vor allem dadurch erreicht, dass neben der Möglichkeit einer Projektion bei dunkler Umgebung auch die Möglichkeit einer tageslichtfähigen Projektion gegeben ist. Die Erfindung hat dabei erkannt, dass zur Verbesserung der Bildqualität ein Projektor im Innenraum der Konstruktion zur rückseitigen Projektion auf die Darstellungsfläche angeordnet werden kann, wobei zweckmäßigerweise zur Bildung eines gegen Lichteinfall von außen abgedunkelten Raumes, bevorzugterweise zur Bildung einer Dunkelkammer, der Innenraum allseitig begrenzt ist. Mit anderen Worten, die durch das Gerüst oder Gerippe der Röhren gebildeten Zwischenräume werden vorteilhaft allseitig durch lichtdichte Verdunkelungsflächen begrenzt. Das heißt, vorzugsweise wird der Innenraum durch weitere an einem von einem weiteren Teil der Röhren gebildeten weiteren Rändern angeordnete Verdunkelungsflächen begrenzt. Auf diese Weise ist der Innenraum der Konstruktion abgedunkelt, was erheblich verbesserte Rückprojektionen auf die Darstellungsfläche auch bei Tageslicht erlaubt. Im Gegensatz dazu sind die eingangs erläuterten zweidimensionalen Großbildleinwände lediglich für Projektionen in dunkler Umgebung geeignet, da ihnen kein verdunkelter Raum zur Anordnung des Projektors zur Verfügung gestellt ist. Vorzugsweise ist eine verdunkelungsfläche durch eine Darstellungsfläche gebildet.

Unter einer Darstellungsfläche wird gemäß der vorliegenden Erfindung insbesondere eine Projektionsfläche verstanden. Dabei ist die Projektionsfläche in Form einer Rückprojektionsfläche gebildet, d.h., eine Projektionsfläche die von der Rückseite - beispielsweise von einem in der Konstruktion angeordnetem Projektor - mit einem Bild beaufschlagt wird, welches von der Vorderseite aus betrachtet werden kann - also beispielsweise von einem Publikum, das die transportable Großbildleinwand von außen betrachtet. Dabei liegt es auch im Rahmen des Konzepts der vorliegenden Erfindung, die Darstellungsfläche als eine Fläche zur Darstellung von Bildern zu nutzen, die nicht - sei es von der Vorder- oder Rückseite - projiziert sind. Solche Bilder können beispielsweise als Werbebilder auf der Darstellungsfläche angebracht sein.

Konsequenterweise liegt es auch im Rahmen des Konzepts der vorliegenden Erfindung nicht nur eine, sondern eine Vielzahl von, an durch einen weiteren Teil der Röhren gebildeten Rand oder Rändern, Darstellungsflächen anzuordnen, die jeweils entweder zur Projektion von bewegten oder unbewegten Bildern oder als eine große Darstellungsfläche für nicht-projizierte Bilder dienen können. Beispielsweise liegt auch eine Konstruktion im Rahmen des Konzepts der Erfindung, bei der lediglich eine einzige Darstellungsfläche als Projektionsfläche genutzt ist und die weiteren - beispielsweise seitlichen und dachseitigen - Darstellungsflächen als Werbeflächen genutzt sind. Teil des Konzepts ist auch eine Konstruktion, bei der alle verfügbaren Darstellungsflächen oder zumindest alle seitlichen Darstellungsflächen als Projektionsflächen genutzt sind. Dazu kann innerhalb des Innenraums eine entsprechende Anzahl von Projektoren oder ein entsprechend beweglich geführter Projektor zur wechselnden Beaufschlagung der Darstellungsflächen angeordnet sein.

Gemäß der Erfindung bildet der Innenraum einen gegen Lichteinfall von außen abgedunkelten Raum. Zweckmäßigerweise weist die allseitige Begrenzung lichtdichte Flächen auf. Vorzugsweise sind diese in Form einer Darstellungsfläche gebildet. Dabei hat es sich als besonders vorteilhaft erwiesen, eine Fläche auf der Innenseite dunkel und auf der Außenseite hell auszuführen. Dies wirkt auch einer Aufheizung des Innenraums entgegen.

Wie bereits erwähnt, ist insbesondere zur Verfügungsstellung einer tageslichtfähigen transportablen Großbildleinwand von Vorteil, dass der Innenraum zur Bildung einer Dunkelkammer allseitig begrenzt ist. Die Begrenzung kann durch nicht-aufblasbare Verdunkelungsflächen gebildet sein, die sich, je nach Bedarf, ebenfalls als Darstellungsflächen nutzen lassen - sei es als Projektionsfläche oder als bloße bedruckte Darstellungsfläche. Weniger vorteilhaft, aber dennoch denkbar, ist auch die Möglichkeit, zwischen den Röhren lösbar oder unlösbar befestigte flächige befüllbare, insbesondere aufblasbare Elemente anzuordnen. Dies hätte allerdings den Vorteil, dass sich die, durch die Konstruktion gebildete, Dunkelkammer vollständig dadurch zur Verfügung stellen lässt, dass sowohl die Röhren als auch die flächigen Elemente befüllt, vorzugsweise aufgeblasen werden. Ein weiteres Abhängen oder Bespannen der offenen Flächen der Konstruktion entfällt damit. Unabhängig davon in welcher Art die Dunkelkammerkonstruktion realisiert wird, stellen die befüllbaren Röhren der Konstruktion ein dreidimensionales Gerüst oder Gerippe dar, welches der Großbildleinwand innere Stabilität und Eigenstandfestigkeit verleiht.

Gemäß der Erfindung ist vorgesehen, die an einem von einem Teil der Röhren gebildeten Rand angeordnete Darstellungsfläche an einer dem Innenraum zugewandten Seite der Röhren anzuordnen. Mit anderen Worten, ist die Darstellungsfläche bei dieser Ausbildungsform von außen nach innen, zum Innenraum hin, zurückgesetzt. Dadurch bildet sich aufgrund der in der Regel großvolumig ausgebildeten Röhren ein Schattenraum vor der Darstellungsfläche Bei dieser Weiterbildung wird vorteilhaft genutzt, dass die Röhren bereits eine Abmessung haben, die zur Ausbildung eines Lichtschutzes genügen. Im Falle einer Röhrenrahmenkonstruktion um die Darstellungsfläche herum, wird somit ein die Darstellungsfläche allseitig:begrenzender Schattenraum zur Verfügung gestellt, der den Lichteinfall von außen in besonders bevorzugter Weise begrenzt. Es hat sich gezeigt, dass die eine ganz erhebliche Verbesserung der Lichtverhältnisse im Bereich vor einer Darstellungsfläche, insbesondere im Bereich vor einer Projektionsfläche, bewirkt. Selbst im Falle von Lichtschwachen Projektoren lässt sich dennoch eine tageslichtfähige Projektion bei der Großbildleinwand gemäß dieser Weiterbildung realisieren. Alternativ können kostengünstige Projektoren eingesetzt werden, wie z.B. ein Beamer.

Zur Verbesserung des Schattenraums ist insbesondere vorgesehen, eine den Rand bildende Röhre mit einem Durchmesser zu versehen, der wenigstens einem Drittel der Höhe der Darstellungsfläche entspricht.

Weitere vorteilhafte Weiterbildungen der Erfindung sind den Unteransprüchen zu entnehmen und geben im Einzelnen vorteilhafte Möglichkeiten an das oben erläuterte Konzept der Erfindung im Rahmen der Aufgabenstellung sowie hinsichtlich weiterer Vorteile zu realisieren.

Ein Füllmedium ist vorzugsweise Luft, insbesondere Kaltluft. Im Winter kann auch beheizte oder Heißluft vorteilhaft sein. Weitere Füllmedien wie Wasser oder Gas (z.B. N₂ oder Nₑ) sind ebenfalls möglich.

Eine bevorzugte Weiterbildung der Erfindung sieht vor, dass die Röhren aus einem flexiblen Zweiwandmaterial gebildet sind, zwischen dessen beiden Wänden Verbindungen angeordnet sind, die einen vorgegebenen Abstand zwischen den Wänden des Zweiwandmaterials festlegen. Ein Zweiwandmaterial der genannten Art ist aus WO 2005/019568 A1 zu entnehmen. Ein solches Zweiwandmaterial ist in Form eines Gewebes gebildet, zwischen dessen beiden Wänden Verbindungen bestehen. Diese Verbindungen können insbesondere in die Gewebestruktur des Zweiwandmaterials eingewebte Fäden sein, die durch ihre Länge einen maximalen Abstand zwischen den Wänden des Zweiwandmaterials definieren. Zwischen den Wänden ist um die Verbindungen ein Hohlraum ausgebildet, der zur Aussteifung des Materials im Prinzip mit einem beliebigen Fluid, insbesondere mit Luft als Medium, befüllbar ist und dabei luftdicht verschlossen ist. Das Zweiwandmaterial ist insbesondere in Fig. 1, 2 und 3 der genannten Druckschrift gezeigt und in Bezug darauf erläutert. Die Nutzung des genannten Zweiwandmaterials für die Röhren erlaubt die Realisierung einer praktisch beliebigen Form für die Röhren. Ohne die Nutzung des Zweiwandmaterials lassen sich Röhren - im wesentlichen durch die Abmessung ihrer Umhüllung definiert - als wulstartig ausbilden. Bei Nutzung des Zweiwandmaterials lässt sich einer Röhre darüber hinaus eine vorgegebene definierte Form zuordnen, beispielsweise eine zylindrische Form mit rechteckigem Grundquerschnitt oder sechseckigem Grundquerschnitt - je nach Bedarf.

Das genannte Zweiwandmaterial lässt sich auch besonderes vorteilhaft für aufblasbare flächige Elemente nutzen, die gemäß der oben genannten Weiterbildung lösbar oder unlösbar in den Zwischenräumen der durch die Röhren gebildeten Konstruktion an den Röhren angeordnet sein können.

Vorzugsweise kommunizieren die Röhren, oder flächige Elemente, über Füllöffnungen miteinander. Insbesondere können die Röhren auch im Falle einer oben genannten Weiterbildung mit einem flächigen, befüllbaren - insbesondere aufblasbaren - Element über Füllöffnungen kommunizieren. Vorteilhafterweise lässt sich dadurch die Konstruktion der transportablen Großbildleinwand durch einen einzigen Anschluss befüllen. Mit anderen Worten, befüllbare Elemente, insbesondere die Röhren der Konstruktion, werden zusammen und gleichzeitig befüllt, insbesondere aufgeblasen. Dies schließt jedoch nicht aus, dass auch separate aneinandergefügte oder fügbare Elemente oder Röhren der Konstruktion unabhängig voneinander, d.h., gegebenenfalls nacheinander befüllbar sind.

Wie oben bereits erwähnt, erweist es sich im Rahmen einer besonders bevorzugten Weiterbildung als vorteilhaft, dass die Konstruktion frei von flächigen befüllbaren Teilhohlkörpern ist. Mit anderen Worten, besteht der Hohlkörper in Form der Konstruktion vollständig aus den Röhren. Dies garantiert die Eigenstandfestigkeit des Hohlkörpers und eine Dunkelkammer lässt sich auf besonders einfache Weise durch Abhängen der Zwischenräume realisieren.

Es hat sich im Rahmen einer Weiterbildung darüber hinaus als besonders vorteilhaft erwiesen, dass an dem Rand ein Lichtschirm und/oder eine oder mehrere Blenden angeordnet sind. Dies gilt insbesondere für den Rand, an dem eine als Projektionsfläche genutzte Darstellungsfläche angeordnet ist. Gemäß dieser Weiterbildung wird somit nicht nur ein Lichteinfall aus dem Rücken der Projektionsleinwand - durch Realisierung einer Dunkelkammer - begrenzt, sondern auch ein Lichteinfall von der Vorderseite auf die Projektionsfläche ist durch den Lichtschirm begrenzt. Der Lichtschirm bildet auf vorteilhafte Weise einen Schattenraum vor der Darstellungsfläche, insbesondere der Projektionsfläche. Auf diese Weise wird die Tageslichtfähigkeit der Großbildleinwand weiter verbessert.

Bevorzugterweise ist ein Projektor im Innenraum der Großbildleinwand zur Rückprojektion auf die Projektionsfläche variabel positionsverstellbar angeordnet. Insbesondere ist ein Projektor höhenverstellbar, beispielsweise auf einer Hebebühne angeordnet. Auf diese Weise lassen sich insbesondere die Lichtintensitäten des Projektors auf der Rückseite der Projektionsfläche an die außerhalb der Großbildleinwand herrschenden Lichtverhältnisse anpassen.

Hinsichtlich der Ausbildung der Darstellungsfläche haben sich unterschiedliche Ausführungen als vorteilhaft erwiesen. Im Falle einer Projektionsfläche ist diese vorteilhaft in Form einer halbtransparenten Leinwand gebildet. Diese kann je nach den umgebenden Lichtvierhältnissen als milchig hell ausgebildet sein oder auch bräunlich beige. Im Falle einer Darstellungsfläche in Form von Druckflächen, beispielsweise als Megabrintleinwände, lässt sich die Darstellungsfläche besonders vorteilhaft als Plane ausbilden. Eine solche Plane kann gelocht oder perforiert sein. Dies hat Gewichtsvorteile.

Zur Anbringung einer Darstellungsfläche weist eine den Rand bildende Röhre vorzugsweise eine Ösenleiste auf.

Um einen Eingang in die Konstruktion, zu ermöglichen ist vorteilhaft vorgesehen, dass wenigstens eine Stelle am Rand einer Grundfläche der Konstruktion röhrenfrei ist. Mit anderen Worten, eine die Grundfläche der Konstruktion berandende Röhre weist eine Unterbrechung auf bzw. endet an einer Eingangsöffnung. Ein solcher Eingang ist insbesondere an der Rückseite, d.h., der der Projektionsfläche gegenüberliegenden Seite der Konstruktion vorgesehen.

Für die Konstruktion lassen sich gemäß dem Konzept der Erfindung grundsätzlich unterschiedlichste räumliche Geometrien realisieren. Als besonders vorteilhaft hat sich insbesondere im Hinblick auf das Format ein für Kinoaufführungen übliches Bildformat erwiesen, dass die Konstruktion einen würfelförmigen Innenraum umgibt. Darüber hinaus sind dreidimensionale Formen auch in Form eines Quaders, einer Kugel oder Kalotte öder eines Polyeders möglich. Es lassen sich auch zylindrische Formen mit beliebiger Grundfläche realisieren.

Während sich die Erfindung als besonders nützlich für die Anwendung betreffend Projektionsdarstellungen erweist und in diesem Sinne zu verstehen ist und während die Erfindung im Folgenden im Detail auch anhand von Beispielen beschrieben wird, welche mit der Projektion von bewegten Bildern auf eine Großbildleinwand treffen, so sollte dennoch klar sein, dass das hier beschriebene Konzept, wie beansprucht, ebenfalls nützlich im Rahmen von anderen Anwendungen ist, welche außerhalb der Projektion beweglicher Bilder liegen und Verwendungen betreffen, welche nicht im Kino- öder dem Bildübertragungsbereich liegen. Beispielsweise könnte das vorgestellte Konzept ebenso Anwendung finden für reine Werbezwecke oder allgemein zur Realisierung von Vorrichtungen, die eine zu bevorzugende Eigenstandfestigkeit benötigen. Ein Beispiel dafür wäre im Falle einer kubischen Großbildleinwand die Verwendung als ein reiner Werbewürfel. Vorteilhaft könnte das Konzept auch z.B. genutzt werden zur Realisierung eines bloßen Anschauungsobjektes oder zur Realisierung von Bühnen, auf den Darstellungen stattfinden sollen.

Die Großbildleinwand kann vorzugsweise Abmessungen aufweisen, die deutlich über Maßen von zwei Metern für Länge, Breite und Höhe liegen. Besonders vorteilhaft sind Maße bei fünf bis zehn Meter. Eine Röhre kann einen Durchmesser deutlich oberhalb von einem Meter aufweisen.

Ausführungsbeispiele der Erfindung werden nun nachfolgend anhand der Zeichnung im Vergleich zum Stand der Technik beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, dass vielfältige Modifikationen und Änderungen betreffend Form und Details einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im Folgenden gezeigten und beschriebenen Ausführungsform oder beschränkt auf einen Gegenstand, der eingeschränkt wäre, im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Zum weiteren Verständnis der Erfindung wird nun in Bezug auf die Figuren der Zeichnung eine bevorzugte Ausführungsform der Erfindung am Beispiel einer Großbildleinwand mit einer Projektionsfläche für bewegte Bilder erläutert. Die Zeichnung zeigt in:
- Fig. 1:: eine perspektivische Ansicht einer Konstruktion einer Großbildleinwand mit welcher sich eine besonders bevorzugte Ausführungsform der Erfindung wie sie zeichnerisch in Fig. 6 bis Fig. 11 dargestellt ist realisieren läßt.
- Fig. 2:: eine perspektivische Rückansicht der Konstruktion der Großbildleinwand von Fig. 1;
- Fig. 3:: eine perspektivische Darstellung der Großbildleinwand mit eingesetzten Darstellungsflächen, wobei gemäß einer besonders bevorzugten Ausführungsform der Erfindung die Projektionsfläche zurückgesetzt ist und weitere Darstellungsflächen zur Aufnahme von Werbeflächen abgehängt sind und dadurch eine tageslichtprojektionsfähige Großbildleinwand mit einer Dunkelkammer zur Aufnahme des Projektors gebildet ist;
- Fig. 4:: eine perspektivische Frontalansicht der Großbildleinwand von Fig. 1;
- Fig. 5:: eine Vorderansicht einer Großbildleinwand von Fig. 3 gemäß einer besonders bevorzugten Ausführungsform der Erfindung;
- Fig. 6:: eine Seitenansicht der Großbildleinwand von Fig. 3;
- Fig. 7:: eine Draufsicht auf eine Großbildleinwand von Fig. 3;
- Fig. 8:: eine Rückansicht einer Großbildleinwand von Fig. 3;
- Fig. 9:: eine Schnittansicht einer Großbildleinwand der Fig. 5 entlang der Linie A - A;
- Fig. 10:: eine Schnittansicht einer Großbildleinwand der Fig. 6 entlang der Linie B - B;
- Fig. 11:: eine Schnittansicht einer Großbildleinwand der Fig. 8 entlang der Linie C - C.

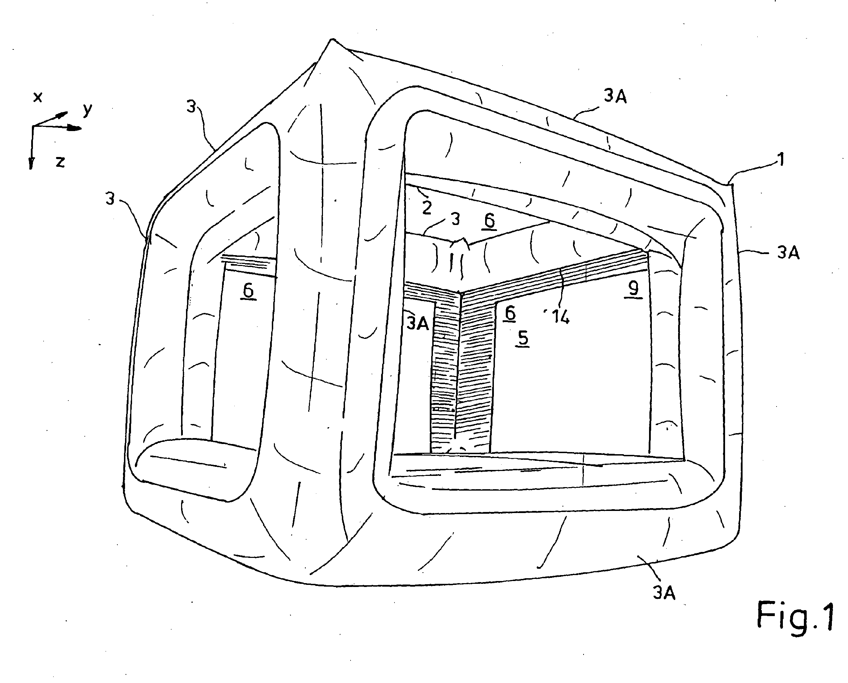

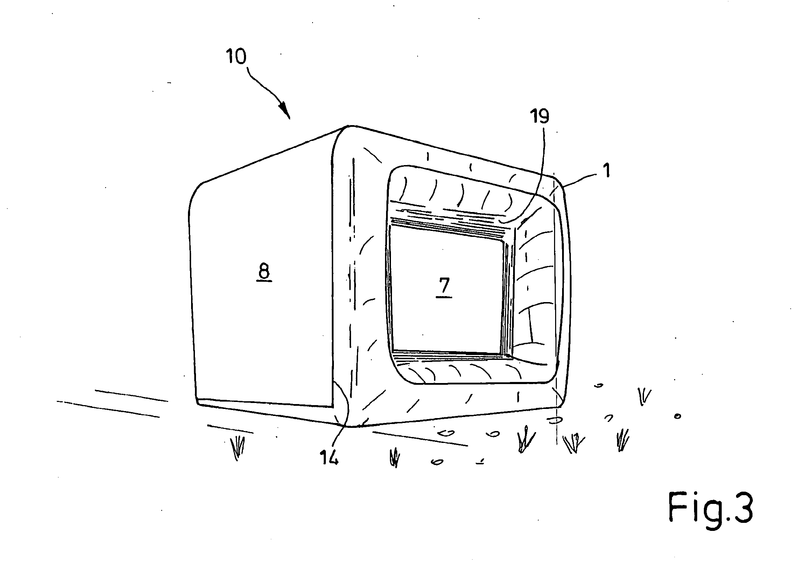

Fig. 1 zeigt einen befüllbaren, hier mit Kaltluft, aufblasbaren, formvariablen Hohlkörper 1 in Form einer Konstruktion 1 aus befüllbaren Röhren 3 als Teil einer transportablen Großbildleinwand. Die Röhren 3 dienen dabei zur Festlegung eines von der Konstruktion 1 festgelegten, und hier umgebenen, dreidimensionalen Innenraums 5 und sind dazu in drei Raumrichtungen x, y, z orientiert. Der Innenraum 5 ist wie in Fig. 3 gezeigt durch wenigstens eine Darstellungsfläche 7, vorliegend in Form einer Projektionsfläche, begrenzt. Die Projektionsfläche 7 ist vorliegend an einem von einem Teil der Röhren 3A gebildeten Rand angeordnet. Insbesondere ist bei der hier beschriebenen Ausführungsform der Innenraum 5 zur Bildung einer Dunkelkammer allseitig durch weitere Darstellungsflächen 8 begrenzt, von denen eine in Fig. 3 zu sehen. Mit anderen Worten, der in Fig. 1 gezeigte von den einrahmenden Röhren 3A gebildete flächige Zwischenraum 9 ist durch die in Fig. 3 gezeigte Projektionsfläche 7 verdeckt und die weiteren in Fig. 1 gezeigten flächigen Zwischenräume 6 bei dem durch die Röhren 3 gebildeten Gerüst/Gerippe der Konstruktion 1 sind durch weitere Darstellungsflächen 8 abgedeckt. Die Röhren 3, 3A bilden also eine den Innenraum 5 hier allseitig festlegende und in diesem Sinne umgebende Kantenkonstruktion 1, während die seitlichen Zwischenräume zwischen dem Gerüst/Gerippe der Röhren 3, 3A durch Darstellungsflächen - sei es als Projektionsfläche 7 oder als Werbefläche 8 - abgedeckt sind. Auf diese Weise ist die transportable Großbildleinwand der hier beschriebenen Ausführungsform in Form eines großdimensionierten, würfelähnlichen dreidimensionalen Gebildes konzipiert, um Leinwandprojektionen im mobilen Einsatz bei Tageslicht zu ermöglichen.

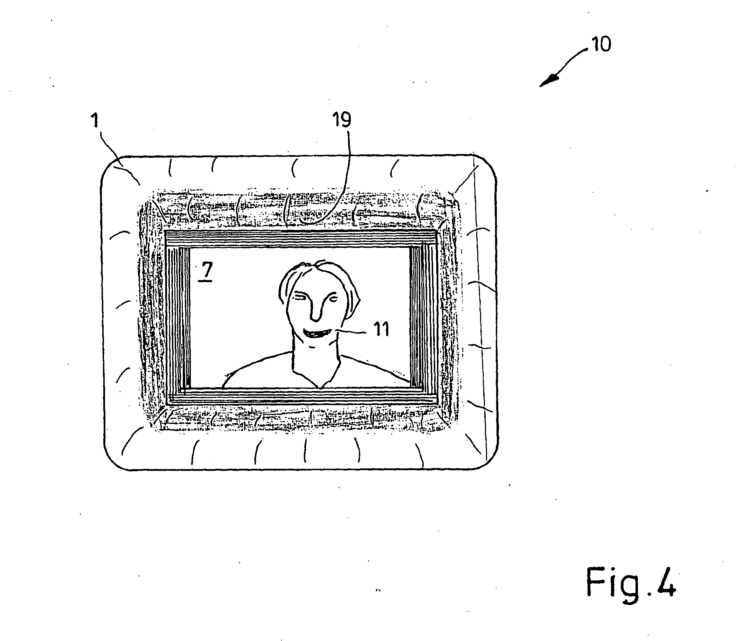

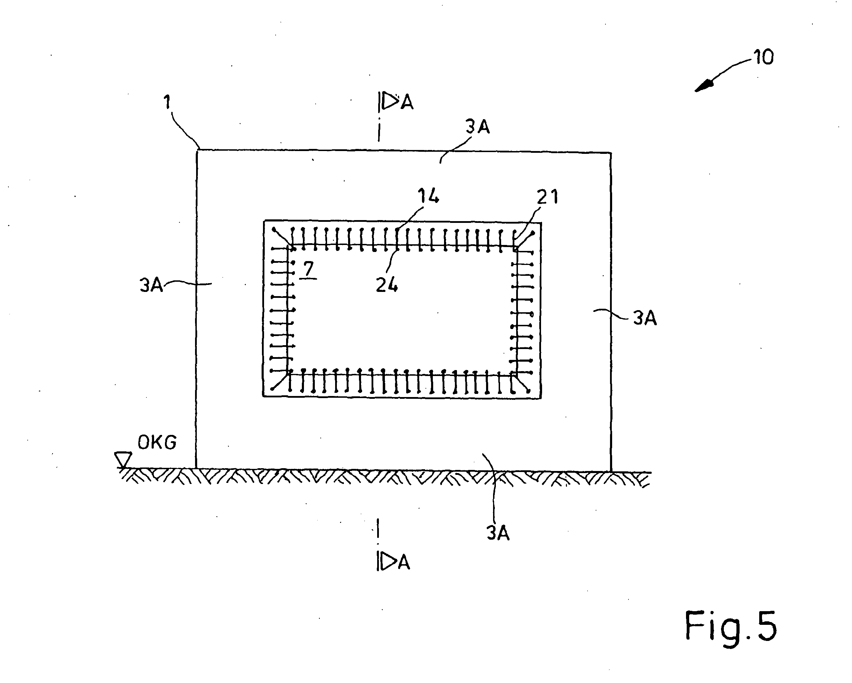

Dabei kommt die Technik der Rückprojektion aus einem durch den Innenraum 5 gebildeten verdunkeltem Raum zum Einsatz. Wie in Fig. 4 zu sehen ist, wird ein im dunklen Innenraum 5 befindlicher in den Fig. 5 bis 11 näher beschriebener Projektor genutzt, um ein Bild 11 auf eine spezielle die Projektionsleinwand 7 bildende Rückprojektionsfolie zu werfen, auf der ein Betrachter auch bei Tageslicht das Bild 11 von außen mit ausreichender Helligkeit und Kontrast erkennen kann. Eine solche Tageslichtprojektion wäre ohne den als Dunkelraum ausgebildeten Innenraum 5 praktisch nicht möglich. Dies ist der gravierendste Nachteil der eingangs erläuterten zweidimensionalen Leinwände des Standes der Technik. Darüber hinaus gewährleistet die hier beschriebene besonders bevorzugte Ausführungsform der transportablen Großbildleinwand in besonders verbessertem Maße Stabilität und Mobilität aufgrund der durch Röhren 3, 3A gebildeten Konstruktion 1 eines aufblasbaren Röhrenrahmens. Die Röhren haben einen dabei vergleichbar großen Röhrendurchmesser im Bereich von 1,5 m. Ein spezielles in den Fig. 5 bis 11 gezeigtes Lüftergebläse sorgt für einen einfachen und ausreichend stabilen Aufbau der Konstruktion 1, die dadurch eine selbst bei widrigen Wetterbedingungen ausreichende Eigenstandfestigkeit aufweist.

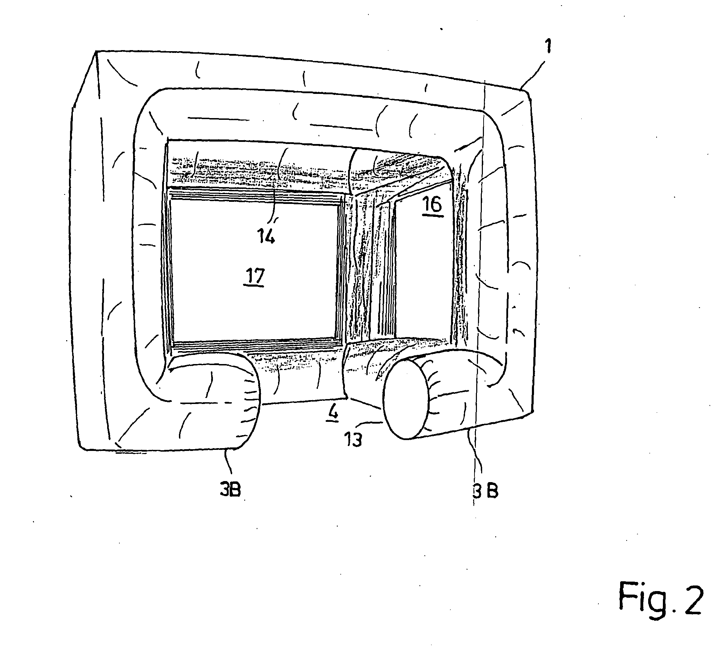

Die Haupteigenschaft der in Fig. 3 und Fig. 4 perspektivisch dargestellten Großbildleinwand liegt in der Projektion von Übertragungen. Ebenso können aber auch Film- und Werbevorführungen gezeigt werden. Darüber hinaus sind die Seitenflächen sowie die Rückwand für die Anbringung von Werbeprints konzipiert. Die Konstruktion 1 weist dazu u.a. in Fig. 1 und Fig. 2 angedeutete Ösenleisten 14 zur Anbringung beispielsweise einer Projektionsfläche 7 auf. Des weiteren ist in der perspektivischen Rückansicht von Fig. 2 zu erkennen, dass wenigstens eine Stelle 13 am Rand einer Grundfläche 4 der Konstruktion 1 röhrenfrei ist. Mit anderen Worten, eine die Grundfläche 4 der Konstruktion 1 berandende Röhre 3B weist eine Unterbrechung 13 zur Unterbrechung der röhrenfreien Stelle 13 auf. Die Stelle 13 dient als Öffnung um den Eingang von Personen an der Rückseite, d.h., an der für die Projektionsfläche 7 vorgesehenen Seite 17 gegenüberliegenden Seite 16, zu ermöglichen.

Zur DarsEeTlung der Großbildleinwand 10 werden hauptsächlich zwei verschiedene Materialien genutzt.

Bei der hier beschriebenen Ausführungsform werden alle Röhren 3, 3A, 3B der Konstruktion 1 aus einer PVC-beschichteten Kunstfaser hergestellt. Mit einem je nach Bedarf einzurichtenden Innendruck beim Aufblasen der Röhren 3, 3A, 3B erreicht diese Faser eine ausreichende Stabilität. Des weiteren erweist sich eine Kunstfaser der genannten Art als ausreichend strapazierfähig, da gerade beim mehrmaligen Ab- und Aufbau im Zuge einer langfristigen Verwendung der Großbildleinwand 10 sowohl Strapazierfähigkeit als auch Luftdichtheit gewährleistet wird.

Die in Fig. 1 gekennzeichneten flächigen Zwischenräume 6, 9 sowie die in Fig. 2 gekennzeichneten flächigen Zwischenräume 17, 16 sind zur Abdunkelung vorgesehen. Dazu dient bei der hier dargestellten Ausführungsform eine in Fig. 3 dargestellte Verdunkelungsfolie 8, die an einer an der Außenseite der Konstruktion 1 angebrachten Ösenleiste 14 befestigt ist. Die Verdunklungsfolie 8 dient als Darstellungsfläche und ist außerdem tageslichtundurchlässig und wasserdicht. D.h., selbst bei erhöhter Sonnenstrahlung ist der Innenraum verlässlich abgedunkelt und gegen eine Überhitzung geschützt.

Die Großbildleinwand 10 erweist sich als vollständig mobil und in höchstem Maße flexibel auf- und abbaubar. Auf- und Abbau sind besonders unkompliziert, da alle für eine Leinwanddarstellung wichtigen Elemente an den aufblasbaren Röhren 3, 3A, 3B befestigt sind. Der Standort kann beliebig gewählt werden, da auch nicht-befestigte Untergründe wie Grasböden, Erde, Sand u.ä. die Standfestigkeit nicht beeinträchtigen. Trotz der durch die Konstruktion 1 gewährleisteten Eigenstandfestigkeit der Großbildleinwand 10 werden dennoch keine Schäden am Untergrund verursacht. Darüber hinaus muss für den Aufbau nicht zwingend ein Fachpersonal akquiriert werden, da eine verantwortliche Einweisung am Objekt für den Auf- und Abbau und den Betrieb der Großbildleinwand 10 sicherheitstechnisch ausreichend ist. Nach Ablassen der Luft aus der Konstruktion 1 und im zusammengefalteten Zustand findet der Hohlkörper 1 auf einer Europalette Platz, um zum nächsten Standort transportiert werden zu können.

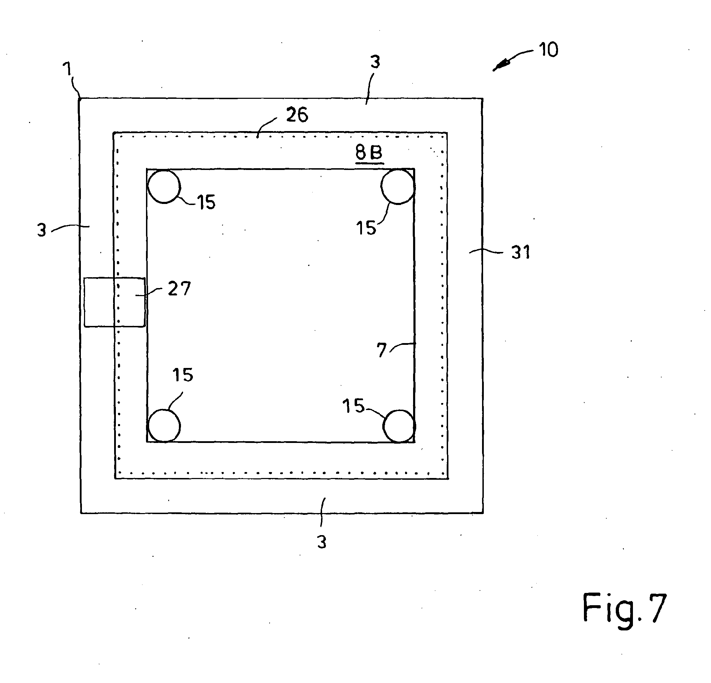

Des Weiteren hat die hier dargestellte Ausführungsform besonders Sicherheitsvorteile. Es kommen - wie bereits erläutert - keine massiven Bauteile zum Einsatz, die in einem Stromausfall einen Schaden anrichten könnten. Selbst wenn sich Personen bei der Entlüftung im Innenraum 5 der Konstruktion 1 befinden, besteht bei der Absenkung durch das geringe Gewicht des die Konstruktion 1 bildenden Gewebes keine Gefahr für den Menschen. Die Eigenstandfestigkeit und die Sicherheit der Eigenstandfestigkeit wird vor allem durch die Ballastierung im unteren Randbereich des Innenraums gewährleistet. Die Eigenstandfestigkeit kann beispielsweise auch durch in Fig. 7 näher dargestellte Gewichtsfässer 15 noch weiter erhöht werden. Für die Realisierung eines solchen Gewichtsfasses 15 eignen sich Abmessungen im Bereich eines Durchmessers von 0,7 m und einer Höhe von 1,2 m. Mit Wasser gefüllte Gewichtsfässer erhöhen die Eigenstandfestigkeit der Konstruktion 1 noch weiter gegen Gleiten und Kippen, beispielsweise bei aufkommenden starken Winden oder Sturmböen. Für den Fall, dass bei Unwettern und starken Stürmen oder Orkanen eine notgedrungene Arretierung der Großbildleinwand 10 oder der Konstruktion 1 am Boden gewährleistet werden muss, besteht, wie auch bei bekannten Konzepten, die Möglichkeit die Konstruktion 1 mit Seilen am Boden zu befestigen. Dabei können sowohl Gewichte als auch Erdanker zum Einsatz kommen. Diese zusätzlichen Sicherheitsmaßnahmen sind in den Fig. 1 bis 11 nicht dargestellt, da sie für eine Eigenstandfestigkeit der Konstruktion 1 bzw. der Großbildleinwand 10 unter normalen Umgebungsbedingungen nicht notwendig sind.

Die in Fig. 1 bis Fi. 4 gezeigte besonders bevorzugte Ausführungsform der Großbildleinwand 10 weist einen Röhrendurchmesser von 1,5 m auf und hat dabei ein Gesamtgewicht im aufgebauten Zustand von etwa 500 kg. Sie arbeitet mit Darstellungsflächen, die nach außen eine weißliche Farbe aufweisen und nach innen eine dunkle Farbe, z.B. schwarz. Insbesondere wird als Verdunkelungsfolie eine Verdunkelungsfolie aus beschichtetem PVC-Material genutzt. Vorzugsweise ist dies eine schwer entflammbare PVC-Folie, die selbst bei hohen Flammtemperaturen allenfalls schmort. Die zur Erhöhung der Eigenstandfestigkeit genutzten Arretierungsfässer 15 haben ein Wasserfassungsvermögen von jeweils 350 ltr..

Als weitere überlegende Maßnahme zur Realisierung von verwässerten Lichtverhältnissen selbst bei Tageslichtprojektionen bei der vorliegend beschriebenen besonders bevorzugten Ausführungsform 10 einer Großbildleinwand ist die Realisierung eines in Fig. 3 und Fig. 4 deutlich zu erkennenden Schattenraumes 19 im Bereich vor der Projektionsfläche 7. Dabei ist vorgesehen, dass die an einem von einem Teil der Röhren 3A gebildeten Rand angeordnete Darstellungsfläche 7 an einer dem Innenraum 5 zugewandten Seite - also der inneren Seite 2 der Röhren 3A - angeordnet ist. Wie in Fig. 3 deutlich zu erkennen ist, ist die als Projektionsfläche ausgebildete Darstellungsfläche 7 von außen nach innen zurückgesetzt, um den Schattenraum 19 vor der Darstellungsfläche 7 zu bilden. Die den Rahmen bildenden wulstartigen Röhren 3A bilden dabei einen Lichtschutz, der einen potentiellen Lichteinfall auf die Darstellungsfläche 7 von vorn begrenzt. Wie in Fig. 3 und Fig. 4 ebenfalls zu erkennen ist, haben die Röhren 3A dabei einen Durchmesser, der etwa der Hälfte der Höhe der Darstellungsfläche 7 entspricht. Auf diese Weise ist eine ausreichende Lichtabschirmwirkung durch die Röhren 3A realisiert. Dennoch kann in einer Ausbildung der hier erläuterten Ausführungsform zusätzlich ein Lichtschirm an den Röhren 3A angeordnet sein. Dieser kann beispielsweise in Form einer Markise oder einer oberen und/oder seitlichen Blende, gegebenenfalls mehreren oberen und/oder seitlichen Blenden, oder ähnlichem ausgefahren oder abgespannt werden. Zum Teil kann sich auch wenigstens eine unterhalb der Darstellungsfläche 7 angeordnete Blende als zweckmäßig erweisen.

In Fig. 5 bis Fig. 11 ist die in Fig. 1 bis Fig. 4 erläuterte bevorzugte Ausführungsform einer Großbildleinwand 10 als technische Zeichnung in entsprechenden Seiten und Schnittansichten dargestellt. Dabei ist eine insbesondere für ein Kino- und Fernsehformat geeignete Abmessung für die Großbildleinwand 10 in Form von Metermaßen als Bemaßung beispielhaft angegeben.

Fig. 5 zeigt eine Vorderansicht der Großbildleinwand 10 mit der Konstruktion 1, bei der in der vorliegenden Vorderansicht die den Rahmen für die Projektionsleinwand 7 bildenden Röhren 3A zu erkennen sind. Die Projektionsfläche 7 ist durch Spannverbindungen 21 und entsprechende Ösenleisten 14 an der Konstruktion 1 bzw. den Röhren 3A bzw. durch eine weitere Ösenleiste 24 an der Projektionsfläche 7 befestigt. Die Projektionsfläche selbst weist eine Abmessung von 4,8 m x 2,7 m auf. Andere Maße können ebenfalls realisiert werden und liegen vorzugsweise zwischen zwei und fünf Metern in Länge oder Breite.

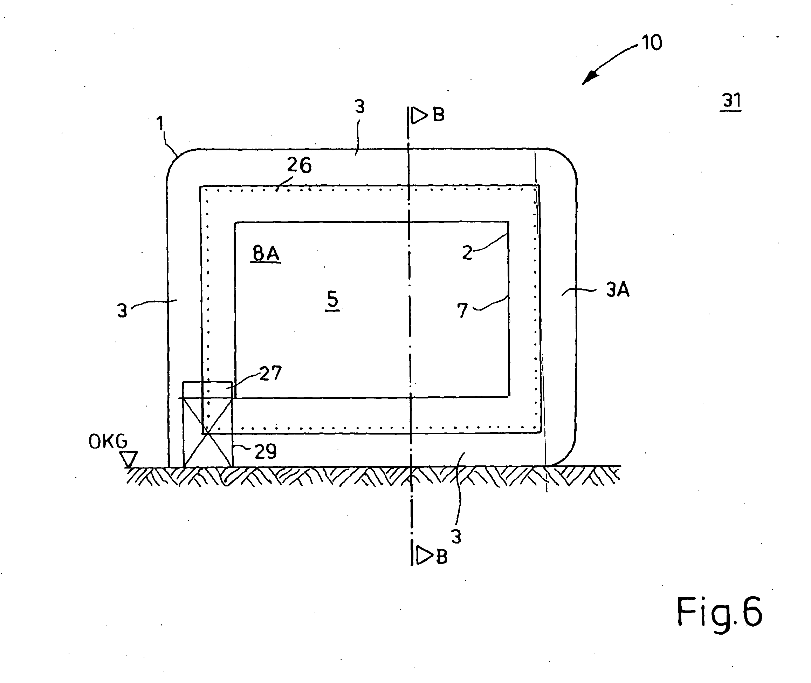

Die in Fig. 6 dargestellte Seitenansicht zeigt Röhren 3 bzw. 3A der Konstruktion. Die als Verdunkelung der Seitenwand ausgeführte Darstellungsfläche ist in einer Alternative zu der Darstellungsfläche 8 von Fig. 3 ausgeführt. Die in Fig. 6 dargestellte Seitenwand 8A ist über eine Ösenleistenverbindung 26 an der Außenseite der Konstruktion 1 befestigt. Sie weist dabei eine Abmessung im vorliegenden Fall von 7,3 m x 5,2 m auf. Als verdeckte Elemente des Innenraums 5 ist in Fig. 6 des weiteren die als Projektionsfläche ausgebildete Darstellungsfläche 7 auf der Innenseite 2 der Röhren 3A gezeigt. Des weiteren ist der im Innenraum 5 angeordnete Projektor 27 gezeigt, welcher auf einer höhenverstellebaren Hebebühne 29 angeordnet ist. Über die Höhenpositionierung des Projektors 27 mittels der Hebebühne 29 lassen sich die Lichtverhältnisse auf der Rückseite der Projektionswand 7 so einstellen, dass diese den Lichtverhältnissen der Umgebung im Außenbereich 31 der Großbildleinwand 10 angemessen sind.

Fig. 7 zeigt die Draufsicht auf die Großbildleinwand 10 mit den zur Absicherung der Eigenstandfestigkeit dienenden Befestigungsfässern 15. Eine das Dach bildende Darstellungsfläche 8B dient außerdem der Verdunkelung und ist ähnlich wie in Fig. 6 über eine Ösenverbindung 26 an den Röhren 3 und 3A der Konstruktion 1 befestigt. Die Darstellungsfläche 8B weist vorliegend eine Abmessung von 7,3 m x 7,3 m auf. Alle weiteren Bezugszeichen sind wie in Fig. 6 gewählt.

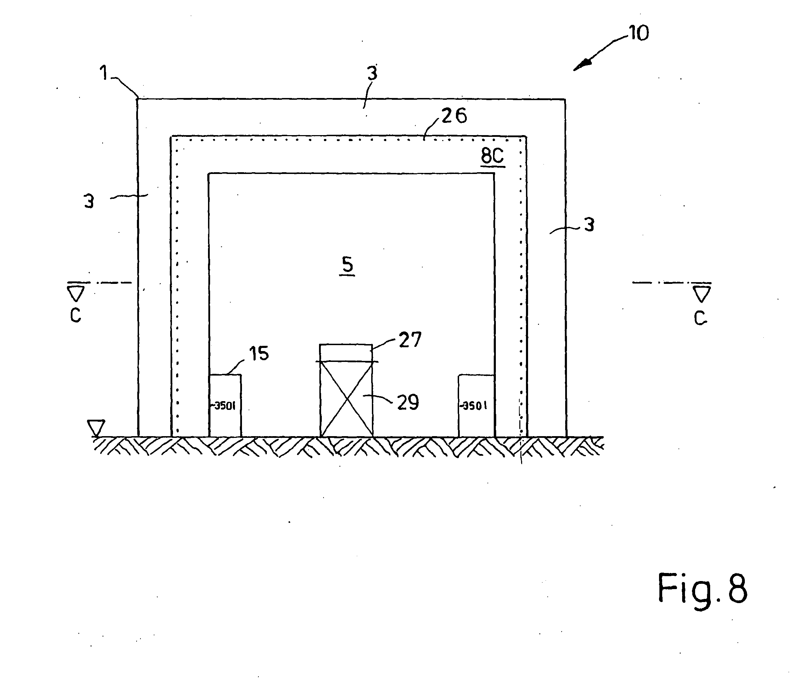

In der in Fig. 8 dargestellten Rückansicht der Großbildleinwand 10 sind die bereits erläuterten Elemente mit jeweils den gleichen Bezugszeichen wie in den vorherigen Figuren versehen. In einer Abwandlung der in Fig. 2 dargestellten Konstruktion 1 ist auf der Rückseite von der Anbringung einer unterbrochenen Röhre 3B - mit anderen Worten, von der Anbringung von Röhrenstutzen - abgesehen worden. Vielmehr ist der rückseitige, durch die Röhren 3 gebildete, Rahmen der Konstruktion 1 als nach unten geöffnetes U-förmiges Profil gebildet, das von einer Darstellungsfläche 8C zur Verdunkelung des Innenraums 5 abgedeckt ist. Dieses ist, ähnlich wie die Darstellungsflächen 8A, 8B in Fig. 6 und Fig. 7, durch eine Ösenverbindung 26 an der Außenseite der Röhre 3 der Konstruktion 1 befestigt. Die als Rückwand ausgebildete Darstellungsfläche 8C weist dabei eine Abmessung von 7,3 m x 6 m auf.

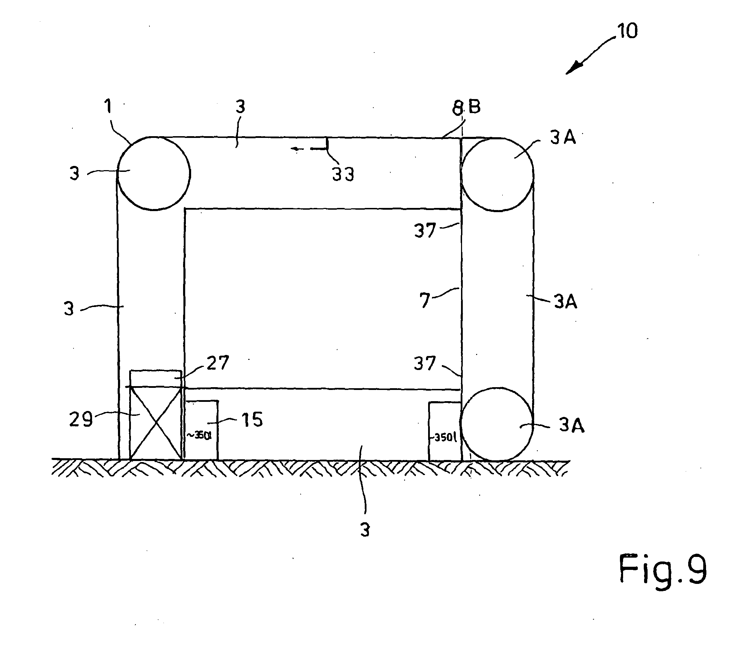

Die in Fig. 9 dargestellte Schnittzeichnung zeigt eine Ansicht entlang der Linie A - A in Fig. 5. Neben den mit den gleichen Bezugszeichen wie in den vorherigen Zeichnungen versehenen Teilen ist in Fig. 9 des weiteren eine als je nach Bedarf auszubildende Drainage 33 an der Darstellungsfläche 8B zur Bildung eines Wasserablaufs am Dach angebracht. Des weiteren ist in Fig. 9 ein die Rückprojektionsfläche 7 umgebender Schattenrahmen 37 dargestellt. Der Schattenrahmen 37 weist eine Breite von etwa 1,5 m auf. Ober diesen Schattenrahmen hinaus geht der Schattenwurf des durch die Röhren 3A der Konstruktion 1 gebildeten Schattenraums hinaus, um die Darstellungsfläche 7 gegen Lichteinfall zu schützen und auf diese Weise insbesondere die Tageslichtprojektionsfähigkeit der Großbildleinwand 10 zu verbessern.

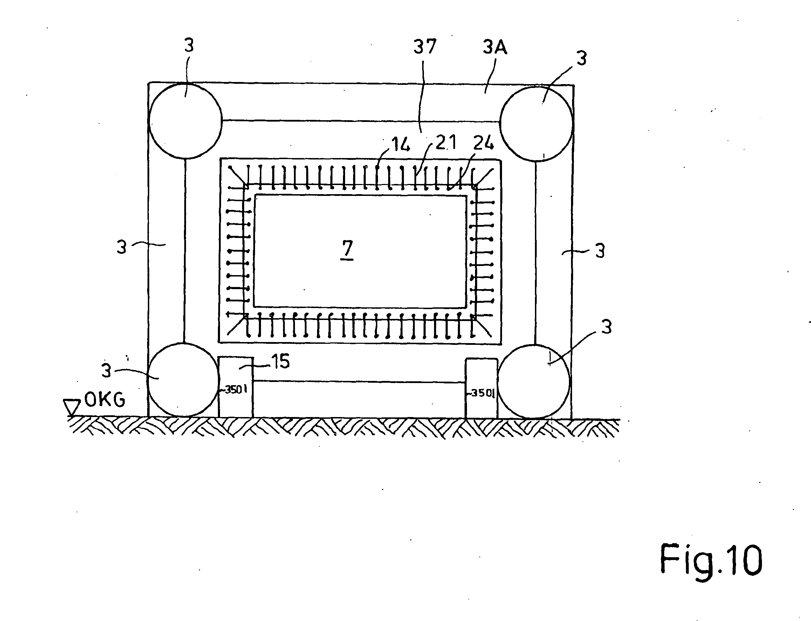

Fig. 10 zeigt eine Schnittansicht der Großbildleinwand 10 entlang der Linie B - B in Fig. 6. Dabei sind wiederum für die gleichen Elemente die in den vorhergehenden Zeichnungen benutzten Bezugszeichen verwendet worden.

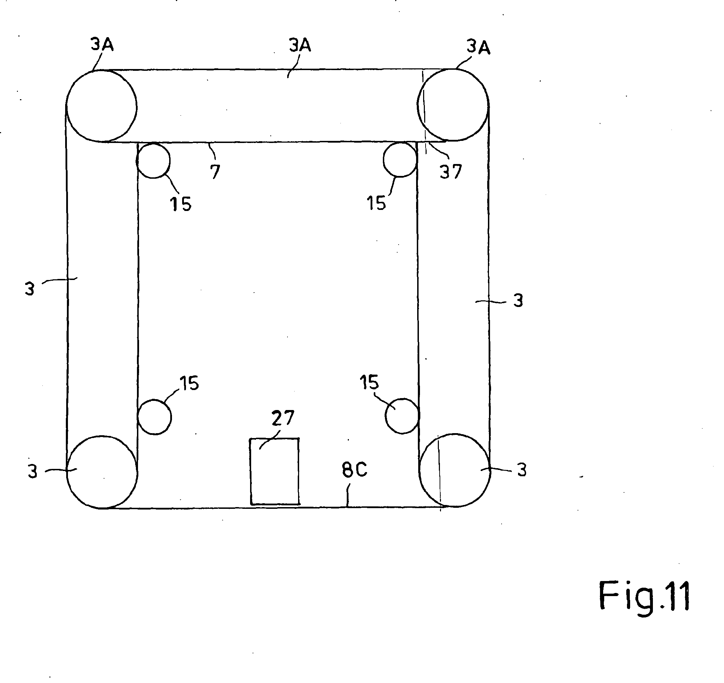

Fig. 11 zeigt eine Schnittansicht der Großbildleinwand 10 entlang der Linie C - C in Fig. 8. Wiederum sind für gleiche Elemente die bereits vorher benutzten Bezugszeichen verwendet worden.

Um eine transportable Großbildleinwand 10 mit einer verbesserten Standfestigkeit zu versehen und gleichzeitig die Möglichkeit einer verbesserten tageslichtfähigen Projektion zu realisieren geht die Erfindung von einer transportablen Großbildleinwand 10 aus, aufweisend einen befüllbaren, formvariablen Hohlkörper in Form einer Konstruktion aus bebüffelbaren Röhren 3, 3A, 3B. Dabei ist erfindungsgemäß vorgesehen, dass ein von der Konstruktion umgebender dreidimensionaler Innenraum 5 festgelegt ist, wobei die Röhren 3, 3A, 3B in drei Raumrichtungen orientiert sind und wobei der Innenraum durch wenigstens eine an einem von einem Teil der Röhren gebildeten Rand angeordnete Darstellungsfläche 7 begrenzt ist.

## Patentansprüche

1. Transportable Großbildleinwand (10) aufweisend einen befüllbaren, formvariablen Hohlkörper (1) in Form einer Konstruktion aus befüllbaren Röhren (3, 3A, 3B), die in drei Raumrichtungen (x, y, z) orientiert sind, wobei ein von der Konstruktion (1) festgelegter dreidimensionaler Innenraum (5) allseitig und durch wenigstens eine an einem von einem Teil der Röhren (3A) gebildeten Rand angeordnete Darstellungsfläche (7, 8) begrenzt ist,
**dadurch gekennzeichnet**
**dass** wenigstens eine Darstellungsfläche in Form einer Rückprojektionsfläche (7) gebildet ist und der Innenraum (5) einen gegen Lichteinfall von außen abgedunkelten Raum bildet und die Rückprojektionsfläche (7) an einer dem Innenraum (5) zugewandten Seite der Röhren (3A) angeordnet ist.

2. Großbildleinwand (10) nach Anspruch 1, **dadurch gekennzeichnet, dass** die allseitige Begrenzung lichtdichte Verdunkelungsflächen aufweist.

3. Großbildleinwand (10) nach Anspruch 2 mit Verdunkelungsflächen in Form von Darstellungsflächen (7, 8).

4. Großbildleinwand (10) nach einem der Ansprüche 1 bis 3, **dadurch gekennzeichnet, dass** die Röhren (3, 3A, 3B) den Innenraum (5) allseitig festlegen.

5. Großbildleinwand (10) nach Anspruch 4, **dadurch gekennzeichnet, dass** die Röhren (3, 3A, 3B) eine Kantenkonstruktion (1) bilden.

6. Großbildleinwand (10) nach einem der Ansprüche 1 bis 5, **dadurch gekennzeichnet, dass** die Röhren (3, 3A, 3B) aus einem flexiblen Zweiwandmaterial gebildet sind, zwischen dessen beiden Wänden Verbindungen angeordnet sind, die einen vorgegebenen Abstand zwischen den Wänden des Zweiwandmaterials festlegen.

7. Großbildleinwand (10) nach einem der Ansprüche 1 bis 6, **dadurch gekennzeichnet, dass** die Röhren (3, 3A, 3B) über Füllöffnungen miteinander kommunizieren.

8. Großbildleinwand (10) nach einem der Ansprüche 1 bis 7, **dadurch gekennzeichnet, dass** die Konstruktion (1) frei von flächigen befüllbaren Teilhohlkörpern ist.

9. Großbildleinwand (10) nach einem der Ansprüche 1 bis 8, **dadurch gekennzeichnet, dass** an dem Rand ein Lichtschirm angeordnet ist.

10. Großbildleinwand (10) nach Anspruch 9, **dadurch gekennzeichnet, dass** der Lichtschirm eine obere und/oder seitliche Blende aufweist.

11. Großbildleinwand (10) nach einem der Ansprüche 1 bis 10, **dadurch gekennzeichnet, dass** eine den Rand bildende Röhre (3, 3A, 3B) einen Durchmesser aufweist, der wenigstens einem Drittel der Höhe der Darstellungsfläche (7) entspricht.

12. Großbildleinwand (10) nach einem der Ansprüche 1 bis 11, **dadurch gekennzeichnet, dass** eine weitere Darstellungsfläche in Form einer Projektionsfläche (7, 8) gebildet ist.

13. Großbildleinwand (10) nach einem der Ansprüche 1 bis 12, **dadurch gekennzeichnet, dass** im Innenraum (5) ein Projektor zur Rückprojektion auf die Rückprojektionsfläche (7) variabel positionsverstellbar angeordnet ist.

14. Großbildleinwand (10) nach einem der Ansprüche 1 bis 13, **dadurch gekennzeichnet, dass** eine Darstellungsfläche als Projektionsfläche (7) in Form einer halbtransparenten Leinwand gebildet ist.

15. Großbildleinwand (10) nach einem der Ansprüche 1 bis 14, **dadurch gekennzeichnet, dass** eine weitere Darstellungsfläche (8) in Form einer Druckfläche gebildet ist.

16. Großbildleinwand (10) nach einem der Ansprüche 1 bis 15, **dadurch gekennzeichnet, dass** eine Darstellungsfläche in Form einer perforierten Leinwand gebildet ist.

17. Großbildleinwand (10) nach einem der Ansprüche 1 bis 16, **dadurch gekennzeichnet, dass** eine den Rand bildende Röhre (3, 3A, 3B) eine Ösenleiste (14) aufweist.

18. Großbildleinwand (10) nach einem der Ansprüche 1 bis 17, **dadurch gekennzeichnet, dass** wenigstens eine Stelle am Rand einer Grundfläche (4) der Konstruktion (1) röhrenfrei ist.

19. Großbildleinwand (10) nach einem der Ansprüche 1 bis 18, **dadurch gekennzeichnet, dass** die Konstruktion (1) einen würfel- oder quaderförmigen Innenraum (5) festlegt.

## Claims

1. Large-sized transportable screen (10), comprising a fillable, shape-variable hollow body (1) in the form of a construction made of fillable tubes (3, 3A, 3B), which are oriented in three spatial directions (x, y, z), a three-dimensional internal space (5) which is defined by the construction (1) being delimited on all sides and by at least one display surface (7, 8) which is arranged on an edge formed by a part of the tubes (3A), **characterised in that** at least one display surface in the form of a rear projection surface (7) is formed, and the internal space (5) forms a chamber which is darkened against light incidence from the outside, and the rear projection surface (7) is arranged on a side of the tubes (3A) which faces the internal space (5).

2. Large-sized screen (10) according to claim 1, **characterised in that** the boundary on all sides has light-proof darkening surfaces.

3. Large-sized screen (10) according to claim 2, comprising darkening surfaces in the form of display surfaces (7, 8).

4. Large-sized screen (10) according to any one of claims 1 to 3, **characterised in that** the tubes (3, 3A, 3B) define the internal space (5) on all sides.

5. Large-sized screen (10) according to claim 4, **characterised in that** the tubes (3, 3A, 3B) form an edge construction (1).

6. Large-sized screen (10) according to any one of claims 1 to 5, **characterised in that** the tubes (3, 3A, 3B) are formed from a flexible double-walled material, between the two walls of which connections, which define a predetermined distance between the walls of the double-walled material, are arranged.

7. Large-sized screen (10) according to any one of claims 1 to 6, **characterised in that** the tubes (3, 3A, 3B) communicate with one another via filling openings.

8. Large-sized screen (10) according to any one of claims 1 to 7, **characterised in that** the construction (1) is free from planar, fillable hollow body parts.

9. Large-sized screen (10) according to any one of claims 1 to 8, **characterised in that** a light shield is arranged at the edge.

10. Large-sized screen (10) according to claim 9, **characterised in that** the light shield has an upper and/or lateral panel.

11. Large-sized screen (10) according to any one of claims 1 to 10, **characterised in that** a tube (3, 3A, 3B) which forms the edge has a diameter which corresponds at least to one third of the height of the display surface (7).

12. Large-sized screen (10) according to any one of claims 1 to 11, **characterised in that** a further display surface is formed in the form of a projection surface (7, 8).

13. Large-sized screen (10) according to any one of claims 1 to 12, **characterised in that** a projector for rear projection onto the projection surface (7) is arranged in the internal space (5) in such a way that it is possible to adjust the position thereof.

14. Large-sized screen (10) according to any one of claims 1 to 13, **characterised in that** a display surface is formed as the projection surface (7) in the form of a semi-transparent screen.

15. Large-sized screen (10) according to any one of claims 1 to 14, **characterised in that** a further display surface (8) is formed in the form of a printed surface.

16. Large-sized screen (10) according to any one of claims 1 to 15, **characterised in that** a display surface is formed in the form of a perforated screen.

17. Large-sized screen (10) according to any one of claims 1 to 16, **characterised in that** a tube (3, 3A, 3B) which forms the edge has an eyelet strip (14).

18. Large-sized screen (10) according to any one of claims 1 to 17, **characterised in that** at least one point on the edge of a base surface (4) of the construction (1) is free from tubes.

19. Large-sized screen (10) according to any one of claims 1 to 18, **characterised in that** the construction (1) defines a cubic or cuboid internal space (5).

## Revendications

1. Ecran (10) de projection à grande image transportable comprenant un corps creux (1) apte à être rempli et de forme variable, sous la forme d'une construction de tubes (3, 3A, 3B) aptes à être remplis, qui sont orientés dans trois directions de l'espace (x, y, z), un espace intérieur (5) en trois dimensions, défini par la construction (1), étant limité de tous les côtés et par au moins une surface d'affichage (7, 8) agencée au niveau d'un bord formé par une partie des tubes (3A), **caractérisé en ce qu'**au moins une surface d'affichage est réalisée sous la forme d'une surface de rétroprojection (7) et l'espace intérieur (5) forme un espace obscurci vis-à-vis de la lumière provenant de l'extérieur et la surface de rétroprojection (7) est agencée au niveau d'une face des tubes (3A) qui fait face à l'espace intérieur (5).

2. Ecran (10) de projection à grande image selon la revendication 1, **caractérisé en ce que** la limite de tous les côtés présente des surfaces d'obscurcissement opaques.

3. Ecran (10) de projection à grande image selon la revendication 2 avec des surfaces d'obscurcissement sous forme de surfaces d'affichage (7, 8).

4. Ecran (10) de projection à grande image selon l'une des revendications 1 à 3, **caractérisé en ce que** les tubes (3, 3A, 3B) définissent l'espace intérieur (5) de tous les côtés.

5. Ecran (10) de projection à grande image selon la revendication 4, **caractérisé en ce que** les tubes (3, 3A, 3B) forment une construction d'arêtes.

6. Ecran (10) de projection à grande image selon l'une des revendications 1 à 5, **caractérisé en ce que** les tubes (3, 3A, 3B) sont formés en un matériau flexible à parois doubles, entre les deux parois duquel sont agencées des liaisons, qui définissent un écart prédéterminé entre les deux parois du matériau à parois doubles.

7. Ecran (10) de projection à grande image selon l'une des revendications 1 à 6, **caractérisé en ce que** les tubes (3, 3A, 3B) communiquent ensemble via des orifices de remplissage.

8. Ecran (10) de projection à grande image selon l'une des revendications 1 à 7, **caractérisé en ce que** la construction (1) est dépourvue de corps creux partiels plats aptes à être remplis.

9. Ecran (10) de projection à grande image selon l'une des revendications 1 à 8, **caractérisé en ce qu'**un réflecteur est agencé au niveau du bord.

10. Ecran (10) de projection à grande image selon la revendication 9, **caractérisé en ce que** le réflecteur présente un diaphragme supérieur et/ou latéral.

11. Ecran (10) de projection à grande image selon l'une des revendications 1 à 10, **caractérisé en ce que** l'un des tubes (3, 3A, 3B) formant le bord présente un diamètre, qui correspond au moins au tiers de la hauteur de la surface d'affichage (7).

12. Ecran (10) de projection à grande image selon l'une des revendications 1 à 11, **caractérisé en ce qu'**une surface d'affichage supplémentaire est réalisée sous la forme d'une surface de projection (7, 8).

13. Ecran (10) de projection à grande image selon l'une des revendications 1 à 12, **caractérisé en ce qu'**un projecteur est agencé dans l'espace intérieur (5) pour la rétroprojection sur la surface de rétroprojection (7).

14. Ecran (10) de projection à grande image selon l'une des revendications 1 à 13, **caractérisé en ce qu'**une surface d'affichage comme la surface de projection (7) est réalisée sous la forme d'un écran semi-transparent.

15. Ecran (10) de projection à grande image selon l'une des revendications 1 à 14, **caractérisé en ce qu'**une surface d'affichage (8) supplémentaire est réalisée sous la forme d'une surface d'impression.

16. Ecran (10) de projection à grande image selon l'une des revendications 1 à 15, **caractérisé en ce qu'**une surface d'affichage est réalisée sous la forme d'un écran perforé.

17. Ecran (10) de projection à grande image selon l'une des revendications 1 à 16, **caractérisé en ce qu'**un tube (3, 3A, 3B) formant le bord présente un porte guide-fils (14).

18. Ecran (10) de projection à grande image selon l'une des revendications 1 à 17, **caractérisé en ce qu'**au moins une position au niveau du bord d'une surface de base (4) de la construction (1) est dépourvue de tube.

19. Ecran (10) de projection à grande image selon l'une des revendications 1 à 18, **caractérisé en ce que** la construction définit un espace interne (5) en forme de dé ou de brique.
